# EUROPÄISCHE PATENTSCHRIFT

(11) **EP 3 947 057 B1**
(45) Veröffentlichungstag und Bekanntmachung des Hinweises auf die Patenterteilung: **23.08.2023**
(21) Anmeldenummer: 20712273.0
(22) Anmeldetag: 13.03.2020
(51) Int. Cl.: B60S 1/40, B60S 1/52, B60S 1/38

(54) **SCHEIBENWISCHERVORRICHTUNG MIT EINER SCHEIBENWASSERVERTEILUNG**
WIPER BLADE DEVICE WITH WIPER FLUID DISTRIBUTION
DISPOSITIF D'ESSUIE-GLACE DE PARE-BRISE AVEC DISTRIBUTION D'EAU DE PARE-BRISE

(30) Priorität: 27.03.2019 DE 102019204193
(43) Veröffentlichungstag der Anmeldung: 09.02.2022
(73) Patentinhaber: Robert Bosch GmbH, 70442 Stuttgart (DE)
(72) Erfinder: RAPP, Harald, 77815 Buehl (DE)
(86) Internationale Anmeldenummer: PCT/EP2020/056931
(87) Internationale Veröffentlichungsnummer: WO 2020/193234

(56) Entgegenhaltungen:
- DE-A1-102005 020 601
- DE-A1-102008 049 270
- FR-A1- 3 015 398
- US-A1- 2013 291 328
- US-A1- 2017 297 534

## Beschreibung

Die Erfindung betrifft eine Scheibenwischervorrichtung, aufweisend ein Wischblatt mit einem Verbindungsanschluss und aufweisend ein Wischarm mit einer Arretierungskappe und mit mindestens einer fluidführenden Leitung, wobei das Wischblatt an dem Verbindungsanschluss über eine Sidelock-Verbindung mit dem Wischarm verbindbar und durch Anpressen der Arretierungskappe gegen den Verbindungsanschluss ortsfest arretierbar ist.

### Stand der Technik

Es sind bereits Wischblätter mit einer integrierten Wasserführung bekannt. Die Wasserführung der Wischblätter ist mit Schlauchleitungen verbunden, die entlang des Wischarms verlegt sind. Die Schlauchleitungen können auch beheizt ausgeführt sein. Eine derartige Wasserführung wird durch einen Adapter fluidleitend mit den Schlauchleitungen verbunden.

Derartige Scheibenwischervorrichtungen sind bisher nur in einer sogenannten Top-Lock Variante bekannt. Die Verbindung der Schlauchleitungen und der Wasserführung wird hierbei durch ein Hineinschieben des Wischblattes in Ausdehnungsrichtung des Wischblattes in den Adapter hergestellt.

Die US 2017/297534 A1 zeigt eine Scheibenwischervorrichtung nach dem Oberbegriff des Anspruchs 1.

### Offenbarung der Erfindung

Die der Erfindung zugrunde liegende Aufgabe kann darin gesehen werden, eine Scheibenwischervorrichtung vorzuschlagen, bei der ein Wischblatt möglichst einfach an den Wischarm montierbar ist.

Diese Aufgabe wird mittels des jeweiligen Gegenstands des unabhängigen Anspruchs 1 gelöst. Vorteilhafte Ausgestaltungen der Erfindung sind Gegenstand von jeweils abhängigen Unteransprüchen.

Nach der Erfindung wird eine Scheibenwischervorrichtung bereitgestellt. Die Scheibenwischervorrichtung weist ein Wischblatt mit einem Verbindungsanschluss und ein Wischarm mit einer Arretierungskappe und mit mindestens einer fluidführenden Leitung auf.

Das Wischblatt ist an dem Verbindungsanschluss über eine Sidelock-Verbindung mit dem Wischarm verbindbar und durch Anpressen der Arretierungskappe gegen den Verbindungsanschluss ortsfest arretierbar.

Der Verbindungsanschluss weist seitlich des Wischblatts angeordnete Düsen auf. Die Düsen sind somit quer zur Längsrichtung bzw. der Erstreckungsrichtung des Wischblatts angeordnet und ausgerichtet. Die Düsen dienen insbesondere zum Versprühen bzw. Verteilen von einer Scheibenwaschflüssigkeit in einem Bereich vor und hinter dem Wischblatt in Bewegungsrichtung des Wischblatts. Die Düsen sind fluidleitend mit mindestens einer in den Verbindungsanschluss eingebrachten Fluidkupplung verbunden, wobei die mindestens eine fluidführende Leitung des Wischarms mit einem Fluidstecker zum Ausbilden einer fluidführenden Verbindung mit der Fluidkupplung verbunden ist. Insbesondere kann der Fluidstecker durch die Arretierungskappe mit der Fluidkupplung in Eingriff gebracht und somit eine fluidleitende Verbindung zwischen den Düsen und den fluidführenden Leitungen des Wischarms hergestellt werden. Die fluidführenden Leitungen können in Form von Kanälen oder von Schlauchleitungen ausgeführt sein.

Durch die Scheibenwischervorrichtung kann eine technisch einfache Montage der Wischblätter ermöglicht werden, da ein Wischblatt gemäß dem Sidelockprinzip seitlich in einen Rotationspin hineinsetzbar und anschließend in eine arretierte Arbeitsposition schwenkbar ist. Die Arretierung kann vorzugsweise durch die Arretierungskappe erfolgen, welche zum Verriegeln des Wischblatts umgeklappt wird.

Die fluidführende Verbindung, welche durch das Zusammenwirken der Fluidkupplung und des Fluidsteckers entsteht, kann einen optimalen Durchfluss der Scheibenwaschflüssigkeit ermöglichen. Gleichzeitig kann die Dichtheit der Verbindung sichergestellt werden.

Durch die Sidelock-Verbindung des Wischblatts am Wischarm kann die Scheibenwischervorrichtung niedriger und somit näher am Fahrzeug angeordnet werden. Hierdurch kann die Scheibenwischervorrichtung in Ruhestellung im Wesentlichen nicht sichtbar am Fahrzeug anliegen.

Erfindungsgemäß ist der Fluidstecker durch die Arretierungskappe verdeckt. Der Fluidstecker ist parallel zu der Arretierungskappe drehbar an dem Wischarm angeordnet. Hierdurch kann der Fluidstecker mit der Arretierungsklappe gleichzeitig geschwenkt bzw. gedreht werden. Somit kann die Arretierungsklappe als ein Bedienhebel für das Herstellen der fluidführenden Verbindung zwischen der Fluidkupplung und dem Fluidstecker eingesetzt werden.

Nach einem weiteren Ausführungsbeispiel ist der Fluidstecker über ein Rotationsgelenk mit der mindestens einen fluidführenden Leitung verbunden. Das Rotationsgelenk ist vorzugsweise ein fluidführendes Rotationsgelenk, sodass die Scheibenwaschflüssigkeit bei unterschiedlichen Winkeln des Fluidsteckers an die Düsen geleitet werden kann. Somit bleibt die Rotation des Wischarms im Betrieb auch mit der fluidführenden Verbindung erhalten.

Gemäß einem weiteren Ausführungsbeispiel ist die Arretierungskappe einseitig drehbar mit dem Wischarm verbunden, wobei der Fluidstecker durch Aufklappen oder Zuklappen der Arretierungskappe aus der Fluidkupplung hinausschwenkbar oder in die Fluidkupplung hineinschwenkbar ist. Hierdurch kann die Montage des Wischblatts besonders einfach und schnell ausgeführt werden.

Durch das gleichzeitige Mitdrehen des Fluidsteckers bei einem Drehen der Arretierungsklappe kann die fluidführende Verbindung automatisch bei einem Öffnen der Arretierungsklappe getrennt und bei einem Schließen der Arretierungsklappe erneut hergestellt werden.

Nach einer weiteren Ausführungsform weist die Arretierungskappe eine Öffnung auf, wobei die fluidführende Verbindung zwischen der Fluidkupplung und dem Fluidstecker einen Entriegelungsknopf zum Öffnen der fluidführenden Verbindung aufweist, welcher durch die Öffnung der Arretierungskappe betätigbar ist. Die Verriegelung der fluidführenden Verbindung kann somit nur durch Betätigen des Entriegelungsknopfs gelöst werden. Ein unbeabsichtigtes Lösen der fluidführenden Verbindung und eine damit einhergehende Leckage der Scheibenwaschflüssigkeit kann hierdurch verhindert werden.

Gemäß einer weiteren Ausführungsfirm ist der Fluidstecker durch Anpressen der Arretierungskappe gegen den Verbindungsanschluss in die Fluidkupplung zum Herstellen der fluidleitenden Verbindung positionierbar. Die Arretierungsklappe kann beispielsweise auf dem Fluidstecker aufliegen. Durch Beaufschlagung der Arretierungsklappe mit Druck kann hierdurch der Fluidstecker formschlüssig in die Fluidkupplung hineingesteckt werden. Ein separates Hineinsetzen des Fluidsteckers in die Fluidkupplung kann hierdurch entfallen.

Nach einer weiteren Ausführungsform weist das Wischblatt eine Heizeinheit auf, wobei die Heizeinheit über einen elektrischen Anschluss mit mindestens zwei in oder an dem Wischarm angeordneten elektrischen Leitern verbindbar ist. Hierdurch kann die bereitgestellte Scheibenwaschflüssigkeit beheizt werden, sodass ein Zufrieren der fluidführenden Leitungen verhindert wird.

Der elektrische Anschluss kann vorzugsweise im Bereich der Arretierungsklappe angeordnet sein. Die elektrische Verbindung kann in Form einer Steckverbindung ausgestaltet sein. Hierzu können mindestens zwei Metallstifte in entsprechende Buchsen bzw. Kupplungen hineinragen und jeweils einen elektrisch leitfähigen Kontakt ausbilden.

Gemäß einem weiteren Ausführungsbeispiel ist der elektrische Anschluss zwischen den elektrischen Leitern und der Heizeinheit durch Anpressen der Arretierungskappe gegen den Verbindungsanschluss herstellbar. Es kann somit parallel zur Herstellung der fluidführenden Verbindung eine elektrische Verbindung zwischen dem Wischarm und dem Wischblatt realisiert werden.

Nach einem weiteren Ausführungsbeispiel ist der elektrische Anschluss durch ein in Längsrichtung in die Arretierungskappe einsetzbares Sicherungselement verriegelbar. Durch den Einsatz eines Sicherungselements kann das unbeabsichtigte Lösen der elektrischen Verbindung verhindert werden.

Gemäß einer weiteren Ausführungsform weist die Arretierungskappe eine aerodynamische Form zum Reduzieren eines Luftwiderstands und/oder zum Einstellen eines Anpressdrucks auf das Wischblatt auf. Die Arretierungsklappe vorzugsweise zum Verriegeln der mechanischen Verbindung zwischen dem Wischblatt und dem Wischarm verwendet werden.

Die Arretierungsklappe kann zusätzlich als Hebel für das Herstellen oder Lösen von elektrischen Verbindungen und/oder fluidführenden Verbindung eingesetzt werden. Darüber hinaus kann die Arretierungsklappe eine aerodynamische Form aufweisen, die weitere Funktionen ermöglicht. Alternativ oder zusätzlich kann die Arretierungsklappe optisch optimiert bzw. an ein Fahrzeugdesign angepasst ausgeprägt sein. Die Arretierungsklappe kann beispielsweise aus einem Metall oder einem Kunststoff bestehen.

Nach einer weiteren Ausführungsform weisen die Fluidkupplung und der Fluidstecker zwei voneinander getrennte Fluidkanäle auf, wobei jeder Fluidkanal dazu eingerichtet ist mindestens eine Gruppe an Düsen fluidleitend mit einer fluidführenden Leitung zu verbinden. Hierdurch kann eine redundante Versorgung der Düsen mit Scheibenwaschflüssigkeit sichergestellt werden. Jeder Fluidkanal dient zum Versorgen von unterschiedlichen Gruppen oder von einer Gruppe von Düsen, wodurch auch bei einem verstopften oder vereisten Fluidkanal noch ausreichend Scheibenwaschflüssigkeit durch die Düsen bereitgestellt wird.

Im Folgenden werden anhand von stark vereinfachten schematischen Darstellungen bevorzugte Ausführungsbeispiele der Erfindung näher erläutert.

### Hierbei zeigen

- Fig. 1: eine perspektivische Darstellung eines Fahrzeugs mit einer Wischblattanordnung gemäß einer Ausführungsform,
- Fig. 2: eine perspektivische Darstellung des Fahrzeugs mit der Wischblattanordnung aus Fig. 1,
- Fig. 3-6: schematische Darstellungen eines Verbindungsbereichs zwischen einem Wischblatt und einem Wischarm
- Fig. 7: eine schematische Darstellung auf den Verbindungsbereichs der Wischblattanordnung und
- Fig. 8-9: perspektivische Darstellungen von einem Verbindungsanschluss und einem Fluidstecker.

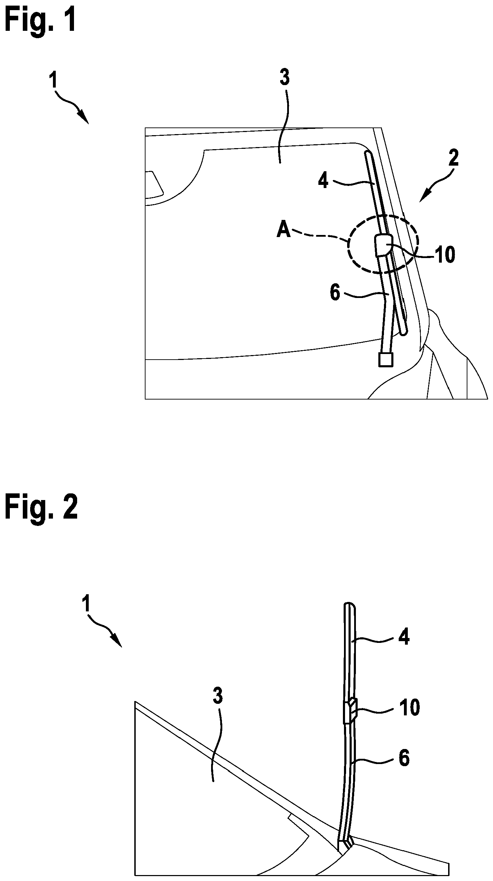

In der Figur 1 ist eine perspektivische Darstellung eines Fahrzeugs 1 mit einer Wischblattanordnung 2 gemäß einer Ausführungsform dargestellt. Insbesondere ist hier die Wischblattanordnung 2 in einer Arbeitsposition bzw. Betriebsposition dargestellt.

Die Wischblattanordnung 2 weist ein Wischblatt 4 und einen Wischarm 6 auf. In einem Verbindungsbereich A ist der Wischarm 6 über einen Verbindungsanschluss 8 schwenkbar mit dem Wischblatt 4 verbunden. Das Wischblatt 4 ist durch eine Arretierungskappe 10 gegen ein unbeabsichtigtes Lösen von dem Wischarm 6 gesichert. Das Wischblatt 4 ist über eine Sidelock-Verbindung mit dem Wischarm 6 verbunden. Das Wischblatt 4 weist eine nicht näher bezifferte Wischleiste aus einem elastischen Material auf, welche an dem Verbindungsanschluss 8 zusammenhängend angeordnet ist.

In der Betriebsposition ist der Wischarm 6 in Richtung einer Windschutzscheibe 3 des Fahrzeugs 1 gelehnt, sodass das Wischblatt 4 gegen die Windschutzscheibe 3 gepresst wird. Hierzu kann der Wischarm 6 nicht dargestellte Federn aufweisen.

Die Figur 2 zeigt die Wischblattanordnung 2 aus der Figur 1 in einer Wartungsposition. Hierbei ist der Wischarm 6 von der Windschutzscheibe 3 des Fahrzeugs 1 abstehend geklappt, wodurch eine Demontage oder Montage des Wischblatts 4 vereinfacht wird.

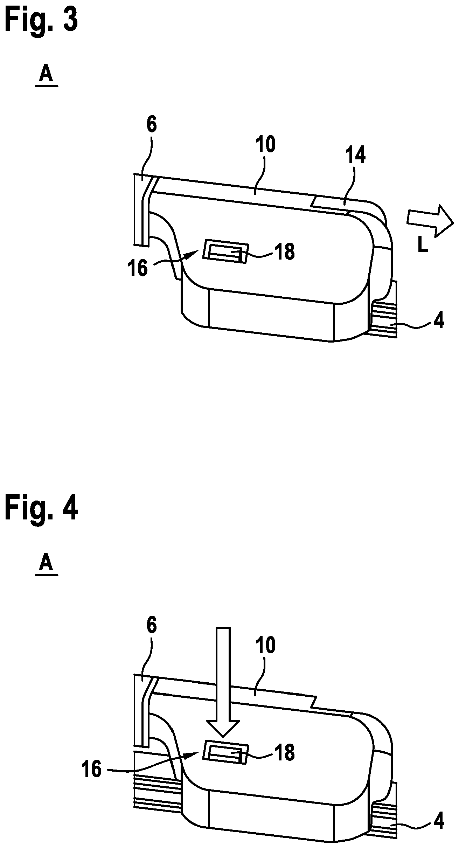

Die Figuren 3-7 zeigen schematische Darstellungen des Verbindungsbereichs A aus der Figur 1, welcher zwischen dem Wischblatt 4 und einem Wischarm 6 ausgebildet ist. Insbesondere dienen die Figuren 3-7 dazu ein Verfahren zum Demontieren des Wischblatts 4 zu veranschaulichen. In einer umgekehrten Reihenfolge kann ein Wischblatt 4 erneut an dem Wischarm 6 montiert werden.

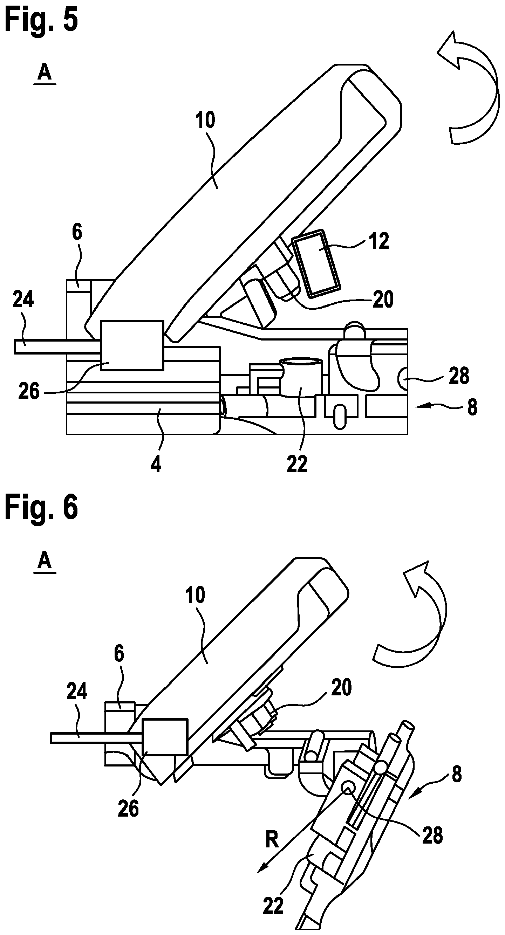

Die Wischblattanordnung 2 weist eine nicht dargestellte Heizeinheit auf, welche in das Wischblatt 4 integriert ist. Die Heizeinheit wird über einen elektrischen Anschluss 12 elektrisch leitend angebunden. Der elektrische Anschluss 12 ist in der Figur 5 schematisch dargestellt und wird durch ein Sicherungselement 14 gegen ein unbeabsichtigtes Lösen verriegelt.

Das Sicherungselement 14 ist in Längsrichtung L in die Arretierungskappe 10 einsetzbar oder hinausziehbar. Der Pfeil veranschaulicht die Richtung zum Entriegeln von dem elektrischen Anschluss 12. Die Längsrichtung L entspricht der länglichen Ausdehnungsrichtung des Wischblatts 4.

In der Figur 4 ist eine Entriegelung einer fluidführenden Verbindung zwischen dem Wischblatt 4 und dem Wischarm 6 veranschaulicht. Hierzu weist die Arretierungskappe 10 eine Öffnung 16 auf.

Durch die Öffnung 16 kann ein Entriegelungsknopf 18 betätigt werden, welcher dazu eingerichtet ist, eine fluidführende Verbindung zwischen dem Wischarm 6 und dem Wischblatt 4 zu entriegeln. Gemäß dem Ausführungsbeispiel kann durch Eindrücken des Entriegelungsknopfs 18 auch die Arretierungskappe 10 geöffnet werden.

Die Figur 5 zeigt den Verbindungsbereich A mit der geöffneten Arretierungskappe 10. Hierbei ist veranschaulicht, dass durch Öffnen bzw. Aufklappen der Arretierungskappe 10 auch ein Fluidstecker 20 aus einer Fluidkupplung 22 von dem Verbindungsanschluss 8 hinausgezogen wird.

Der Fluidstecker 20 ist mit einer fluidführenden Leitung 24 über ein Rotationsgelenk 26 verbunden. Hierdurch kann der Fluidstecker 20 auch bei schwenkenden Bewegungen des Wichsblatts 4 entlang der Rotationsachse R (Figur 6) Scheibenwischwasser führen. Im eingesetzten Zustand der Arretierungskappe 10 wird der Fluidstecker 20 in die Fluidkupplung 22 hineingepresst und ermöglicht hierdurch die Bereitstellung des Scheibenwischwassers in den Verbindungsanschluss 8 des Wischblatts 4.

Der Fluidstecker 20 ist somit über eine Kippverbindung des Rotationsgelenks 26 mit der Fluidkupplung 22 und dem Verbindungsanschluss 8 verbunden. Die Fluidkupplung 22 ist gemäß dem Ausführungsbeispiel in den Verbindungsanschluss 8 integriert.

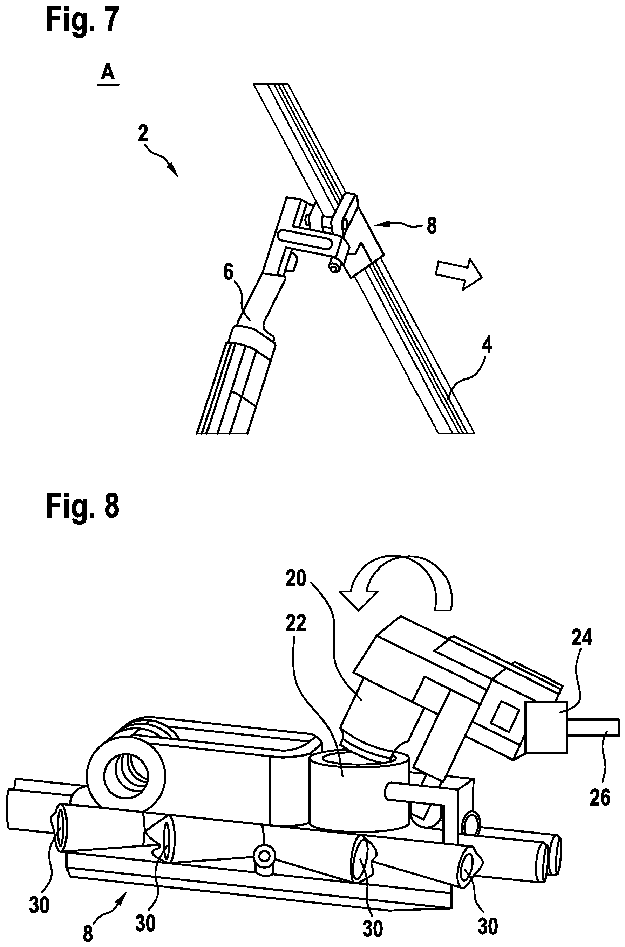

Die Figur 6 veranschaulicht, wie das Wischblatt 4, welches an dem Verbindungsanschluss 8 angeordnet ist, von dem Wischarm 6 in einem letzten Schritt entfernt wird. Hierzu kann das Wischblatt 4 mit dem Verbindungsanschluss 8 um die Rotationsachse R eines Rotationspins 28 der Sidelock-Verbindung gedreht und anschließend axial in Richtung der Rotationsachse R vom Rotationspin 28 abgezogen werden. Das Abziehen des Wischblatts 4 von dem Rotationspin 28 des Wischarms 6 ist in der Figur 7 aus einer weiteren Perspektive dargestellt.

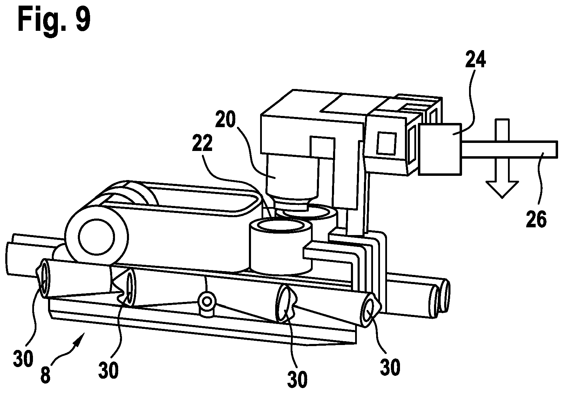

In den Figuren 8-9 sind perspektivische Darstellungen von dem Verbindungsanschluss 8 und einem Fluidstecker 20 im Detail gezeigt. Der Übersicht halber sind das Wischblatt 4 und der Wischarm 6 nicht dargestellt.

Der Fluidstecker 20 weist zwei zylindrisch geformte Rohrabschnitte auf, welche in korrespondierende Öffnungen der Fluidkupplung 22 hineinragen und diese fluiddicht abschließen.

Die Fluidkupplung 22 ist einteilig mit dem Verbindungsanschluss 8 ausgeführt. Vorzugsweise kann der Verbindungsanschluss 8 aus einem Kunststoff bestehen und beispielsweise durch ein Spritzgussverfahren hergestellt werden.

Die Fluidkupplung 22 ist fluidleitend mit einer Vielzahl an Düsen 30 verbunden. Die Düsen 30 sind gemäß dem Ausführungsbeispiel einseitig seitlich am Wischblatt 4 angeordnet. Die Düsen 30 können alternativ beispielsweise in zwei Gruppen angeordnet und beidseitig des Wischblatts 4 an dem Verbindungsanschluss 8 positioniert sein.

Die Düsen 30 sind dazu eingerichtet, das Scheibenwischwasser über eine Fläche auf die Windschutzscheibe 3 des Fahrzeugs 1 zu verteilen. Hierzu sind die Düsen 30 in unterschiedlichen Winkeln ausgerichtet und zeigen von dem Verbindungsanschluss 8 weg. Die jeweiligen Düsen 30 weisen unterschiedliche Winkel auf und sind gespreizt angeordnet.

## Patentansprüche

1. Scheibenwischervorrichtung (2), aufweisend ein Wischblatt (4) mit einem Verbindungsanschluss (8) und aufweisend ein Wischarm (6) mit einer Arretierungskappe (10) und mit mindestens einer fluidführenden Leitung (24), wobei das Wischblatt (4) an dem Verbindungsanschluss (8) über eine Sidelock-Verbindung mit dem Wischarm (6) verbindbar und durch Anpressen der Arretierungskappe (10) gegen den Verbindungsanschluss (8) ortsfest arretierbar ist, wobei der Verbindungsanschluss (8) seitlich des Wischblatts (4) angeordnete Düsen (10) aufweist, **dadurch gekennzeichnet, dass** die Düsen (30) fluidleitend mit mindestens einer in den Verbindungsanschluss (8) eingebrachten Fluidkupplung (22) verbunden sind, wobei die mindestens eine fluidführende Leitung (24) des Wischarms (6) mit einem Fluidstecker (20) zum Ausbilden einer fluidführenden Verbindung mit der Fluidkupplung (22) verbunden ist und wobei der Fluidstecker (20) durch die Arretierungskappe (10) verdeckt ist, wobei der Fluidstecker (20) parallel zu der Arretierungskappe (10) drehbar an dem Wischarm (6) angeordnet ist.

2. Scheibenwischervorrichtung nach Anspruch 1, wobei der Fluidstecker (20) über ein Rotationsgelenk (26) mit der mindestens einen fluidführenden Leitung (24) verbunden ist.

3. Scheibenwischervorrichtung nach einem der Ansprüche 1 bis 2, wobei die Arretierungskappe (10) einseitig drehbar mit dem Wischarm (6) verbunden ist, wobei der Fluidstecker (20) durch Aufklappen oder Zuklappen der Arretierungskappe (10) aus der Fluidkupplung (22) hinausschwenkbar oder in die Fluidkupplung (22) hineinschwenkbar ist.

4. Scheibenwischervorrichtung nach einem der Ansprüche 1 bis 3, wobei die Arretierungskappe (10) eine Öffnung (16) aufweist, wobei die fluidführende Verbindung zwischen der Fluidkupplung (22) und dem Fluidstecker (20) einen Entriegelungsknopf (18) zum Öffnen der fluidführenden Verbindung aufweist, welcher durch die Öffnung (16) der Arretierungskappe (10) betätigbar ist.

5. Scheibenwischervorrichtung nach einem der Ansprüche 1 bis 4, wobei der Fluidstecker (20) durch Anpressen der Arretierungskappe (10) gegen den Verbindungsanschluss (8) in die Fluidkupplung (22) zum Herstellen der fluidleitenden Verbindung positionierbar ist.

6. Scheibenwischervorrichtung nach einem der Ansprüche 1 bis 5, wobei das Wischblatt (4) eine Heizeinheit aufweist, wobei die Heizeinheit über einen elektrischen Anschluss (12) mit mindestens zwei in oder an dem Wischarm (6) angeordneten elektrischen Leitern verbindbar ist.

7. Scheibenwischervorrichtung nach Anspruch 6, wobei der elektrische Anschluss (12) zwischen den elektrischen Leitern und der Heizeinheit durch Anpressen der Arretierungskappe (10) gegen den Verbindungsanschluss (8) herstellbar ist.

8. Scheibenwischervorrichtung nach Anspruch 7, wobei der elektrische Anschluss (12) durch ein in Längsrichtung (L) in die Arretierungskappe (10) einsetzbares Sicherungselement (14) verriegelbar ist.

9. Scheibenwischervorrichtung nach einem der Ansprüche 1 bis 8, wobei die Arretierungskappe (10) eine aerodynamische Form zum Reduzieren eines Luftwiderstands und/oder zum Einstellen eines Anpressdrucks auf das Wischblatt (4) aufweist.

10. Scheibenwischervorrichtung nach einem der Ansprüche 1 bis 9, wobei die Fluidkupplung (22) und der Fluidstecker (20) zwei voneinander getrennte Fluidkanäle aufweisen, wobei jeder Fluidkanal dazu eingerichtet ist mindestens eine Gruppe an Düsen (30) fluidleitend mit einer fluidführenden Leitung (24) zu verbinden.

## Claims

1. Wiper device (2), having a wiper blade (4) with a connection terminal (8) and having a wiper arm (6) with a locking cap (10) and with at least one fluid-guiding line (24), wherein the wiper blade (4) is connectable to the wiper arm (6) at the connection terminal (8) via a side lock connection and is lockable in a fixed position by the locking cap (10) pressing against the connection terminal (8), wherein the connection terminal (8) has nozzles (10) arranged at the side of the wiper blade (4), **characterized in that** the nozzles (30) are connected in a fluid-conducting manner to at least one fluid coupling (22) introduced into the connection terminal (8), the at least one fluid-guiding line (24) of the wiper arm (6) being connected to a fluid plug-type connector (20) to form a fluid-guiding connection with the fluid coupling (22), and the fluid plug-type connector (20) being concealed by the locking cap (10), the fluid plug-type connector (20) being rotatably arranged on the wiper arm (6) parallel to the locking cap (10).

2. Wiper device according to Claim 1, wherein the fluid plug-type connector (20) is connected to the at least one fluid-guiding line (24) via a rotation joint (26).

3. Wiper device according to either of Claims 1 and 2, wherein the locking cap (10) is rotatably connected on one side to the wiper arm (6), the fluid plug-type connector (20) being pivotable out of the fluid coupling (22) or being pivotable into the fluid coupling (22) by opening up or snapping shut the locking cap (10).

4. Wiper device according to one of Claims 1 to 3, wherein the locking cap (10) has an opening (16), wherein the fluid-guiding connection between the fluid coupling (22) and the fluid plug-type connector (20) has a release button (18) for opening the fluid-guiding connection, the release button being actuable by the opening (16) of the locking cap (10) .

5. Wiper device according to one of Claims 1 to 4, wherein the fluid plug-type connector (20) can be positioned in order to produce the fluid-conducting connection by the locking cap (10) being pressed against the connection terminal (8) into the fluid coupling (22).

6. Wiper device according to one of Claims 1 to 5, wherein the wiper blade (4) has a heating unit, wherein the heating unit is connectable via an electrical connection (12) to at least two electrical conductors arranged in or on the wiper arm (6).

7. Wiper device according to Claim 5, wherein the electrical connection (12) between the electrical conductors and the heating unit can be produced by pressing the locking cap (10) against the connection terminal (8).

8. Wiper device according to Claim 7, wherein the electrical connection (12) is lockable by a securing element (14) which is insertable in the longitudinal direction (L) into the locking cap (10).

9. Wiper device according to one of Claims 1 to 8, wherein the locking cap (10) has an aerodynamic shape in order to reduce an air resistance and/or in order to set a contact pressure on the wiper blade (4).

10. Wiper device according to one of Claims 1 to 9, wherein the fluid coupling (22) and the fluid plug-type connector (20) have two fluid ducts which are separate from each other, wherein each fluid duct is configured to connect at least one group of nozzles (30) in a fluid-conducting manner to a fluid-guiding line (24).

## Revendications

1. Dispositif essuie-glace (2), présentant un balai d'essuie-glace (4) pourvu d'un raccord de liaison (8), et présentant un bras de monture d'essuie-glace (6) pourvu d'un capuchon d'arrêt (10) et d'au moins une conduite de transport de fluide (24), dans lequel le balai d'essuie-glace (4) peut être relié au bras de monture d'essuie-glace (6) au niveau du raccord de liaison (8) par une liaison à verrouillage latéral et peut être arrêté de manière stationnaire par l'application du capuchon d'arrêt (10) contre le raccord de liaison (8), dans lequel le raccord de liaison présente des buses (10) disposées latéralement par rapport au balai (4),
**caractérisé en ce que** les buses (30) sont reliées pour le transport de fluide à au moins un accouplement fluidique (22) introduit dans le raccord de liaison (8), dans lequel ladite au moins une conduite de transport de fluide (24) du bras de monture d'essuie-glace (6) est reliée à un connecteur de fluide (20) pour réaliser une liaison de transport de fluide avec l'accouplement fluidique (22), et dans lequel le connecteur de fluide (20) est recouvert par le capuchon d'arrêt (10), dans lequel le connecteur de fluide (20) est disposé en rotation en parallèle au capuchon d'arrêt (10) sur le bras de monture d'essuie-glace (6).

2. Dispositif essuie-glace selon la revendication 1, dans lequel le connecteur de fluide (20) est relié à ladite au moins une conduite de transport de fluide (24) par l'intermédiaire d'une articulation rotative (26) .

3. Dispositif essuie-glace selon l'une quelconque des revendications 1 à 2, dans lequel le capuchon d'arrêt (10) est relié en rotation unilatérale au bras de monture d'essuie-glace (6), dans lequel le connecteur de fluide (20) peut pivoter hors de l'accouplement fluidique (22) ou pivoter vers l'accouplement fluidique (22) par l'ouverture ou la fermeture du capuchon d'arrêt (10).

4. Dispositif essuie-glace selon l'une quelconque des revendications 1 à 3, dans lequel le capuchon d'arrêt (10) présente une ouverture (16), dans lequel la liaison de transport de fluide entre l'accouplement fluidique (22) et le connecteur de fluide (20) présente une tête de déverrouillage (18) pour ouvrir la liaison de transport de fluide, qui peut être actionné par l'ouverture (16) du capuchon d'arrêt (10).

5. Dispositif essuie-glace selon l'une quelconque des revendications 1 à 4, dans lequel le connecteur de fluide (20) peut être positionné par l'application du capuchon d'arrêt (10) contre le raccord de liaison (8) dans l'accouplement fluidique (22) pour établir la liaison de transport de fluide.

6. Dispositif essuie-glace selon l'une quelconque des revendications 1 à 5, dans lequel le balai d'essuie-glace (4) présente une unité de chauffage, dans lequel l'unité de chauffage peut être reliée par une connexion électrique (12) à au moins deux conducteurs électriques disposés dans ou sur le bras de monture d'essuie-glace (6) .

7. Dispositif essuie-glace selon la revendication 6, dans lequel la connexion électrique (12) entre les conducteurs électriques et l'unité de chauffage peut être établie par l'application du capuchon d'arrêt (10) contre le raccord de liaison (8).

8. Dispositif essuie-glace selon la revendication 7, dans lequel la connexion électrique (12) peut être verrouillée par un élément de fixation (14) pouvant être inséré dans le capuchon d'arrêt (10) dans la direction longitudinale (L).

9. Dispositif essuie-glace selon l'une quelconque des revendications 1 à 8, dans lequel le capuchon d'arrêt (10) présente une forme aérodynamique pour réduire une résistance de l'air et/ou pour régler une pression d'application contre le balai d'essuie-glace (4).

10. Dispositif essuie-glace selon l'une quelconque des revendications 1 à 9, dans lequel l'accouplement fluidique (22) et le connecteur de fluide (20) présentent deux canaux de fluide séparés l'un de l'autre, dans lequel chaque canal de fluide est aménagé pour relier au moins un groupe de buses (30) pour le transport de fluide à une conduite de transport de fluide (24).
